# FASCICULE DE BREVET EUROPEEN

(11) **EP 4 016 118 B1**
(45) Date de publication et mention de la délivrance du brevet: **27.08.2025**
(21) Numéro de dépôt: 21214912.4
(22) Date de dépôt: 15.12.2021
(51) Int. Cl.: G01S 7/02, H04B 1/10, H04K 3/00

(54) **PROCÉDÉ DE TRAITEMENT D'UN SIGNAL RADIO PERTURBÉ PAR UN SIGNAL RADAR**
VERFAHREN ZUR VERARBEITUNG EINES DURCH EIN RADARSIGNAL GESTÖRTEN FUNKSIGNALS
METHOD FOR PROCESSING A RADIO SIGNAL DISRUPTED BY A RADAR SIGNAL

(30) Priorité: 18.12.2020 FR 2013661
(43) Date de publication de la demande: 22.06.2022
(73) Titulaire: Commissariat à l'Energie Atomique et aux Energies Alternatives, 75015 Paris (FR)
(72) Inventeur: ROSSON, Patrick, 38054 GRENOBLE CEDEX 09 (FR); DORE, Jean-Baptiste, 38054 GRENOBLE CEDEX 09 (FR); MISCOPEIN, Benoît, 38054 GRENOBLE CEDEX 09 (FR); DEMMER, David, 38054 GRENOBLE CEDEX 09 (FR)
(74) Mandataire: Cabinet Beaumont

(56) Documents cités:
- EP-A1- 0 954 755
- US-A1- 2004 033 789
- US-A1- 2004 239 559
- US-A1- 2007 077 892
- US-A1- 2018 115 909

## Description

### Domaine technique

La présente description concerne de façon générale un procédé de traitement d'un signal radio perturbé par un signal radar et un dispositif d'émission et de réception d'un signal radio pour la mise en oeuvre d'un tel procédé.

### Technique antérieure

En télécommunications, le signal transportant une information doit passer par un moyen de transmission entre un émetteur et un récepteur. Le signal est adapté à la transmission directe par le canal de communication choisi, hertzien, filaire, ou optique. Une transmission radio consiste à utiliser une onde radioélectrique comme support de transmission d'un message. L'émission s'effectue à l'aide d'un émetteur radio et d'une antenne, tandis que la réception s'effectue sur un récepteur radio réglé sur la même fréquence.

La modulation peut être définie comme le processus par lequel le signal est transformé de sa forme originale en une forme adaptée au canal de transmission. L'opération inverse permettant d'extraire le signal de la porteuse est la démodulation. La modulation convertit des informations binaires en tension et/ou courant pour la commande d'une antenne.

L'objectif des modulations numériques est d'assurer un débit maximum de données binaires dans une bande de fréquence donnée, avec un taux d'erreur acceptable par les protocoles et correcteurs amont et aval. Un signal radio reçu par un récepteur peut être perturbé par des signaux parasites. Cela peut être le cas d'un émetteur/récepteur radio, également appelé station radio, équipant un navire, appelée station radio maritime par la suite, et échangeant des signaux radio avec une station radio située à terre, et appelée station radio terrestre par la suite. En effet, d'autres sources radio peuvent être présentes sur le navire fonctionnant à différentes fréquences et à différentes puissances d'émission, comme par exemple un radar. Le signal radio reçu par la station à bord du navire peut alors être perturbé par le signal radar.

Il existe des procédés de traitement d'un signal radio reçu par une station radio pour supprimer les signaux parasites. Toutefois, la mise en oeuvre de tels procédés suppose de pouvoir détecter les signaux parasites dans le signal radio, ce qui peut être difficile. Les documents US 2018/115909, US 2004/033789, EP 0 954 755, US 2004/239559, et US 2007/077892 décrivent chacun un procédé de traitement d'un signal radio perturbé.

### Résumé de l'invention

Un mode de réalisation pallie tout ou partie des inconvénients des procédés de traitement de signaux radio connus.

Un mode de réalisation prévoit un procédé de traitement par un émetteur/récepteur radio d'un signal radio comprenant un signal de télécommunications perturbé par des impulsions d'un signal radar, le procédé comprenant les étapes suivantes :
a) estimer la puissance instantanée des impulsions ;
b) estimer le rapport entre la puissance moyenne du signal de télécommunications et la puissance instantanée des impulsions radar ; et
c) modifier le signal radio aux emplacements des impulsions radar lorsque ledit rapport est inférieur à un seuil.

Selon un mode de réalisation, le signal radio n'est pas modifié lorsque ledit rapport est supérieur au seuil.

Selon un mode de réalisation, le seuil est inférieur ou égal au rapport signal à bruit du signal radio.

Selon un mode de réalisation, le procédé comprend la transmission d'une requête d'absence d'émission du signal de télécommunication lorsque les impulsions n'ont pas été détectées.

Selon un mode de réalisation, le procédé comprend la transmission d'une requête d'augmentation du gain d'amplification utilisé pour fournir le signal radio lorsque les impulsions n'ont pas été détectées.

Selon un mode de réalisation, l'étape a) comprend une recherche des impulsions dans le signal radio et une détermination de la puissance instantanée des impulsions lorsque les impulsions ont été détectées.

Selon un mode de réalisation, l'étape a) comprend une estimation de la puissance instantanée des impulsions lorsque les impulsions n'ont pas été détectées dans le signal radio.

Selon un mode de réalisation, la recherche des impulsions est réalisée dans des premières phases du signal radio dans lesquelles le signal de télécommunications est susceptible d'être émis lorsque la puissance instantanée des impulsions est supérieure à un seuil de puissance et seulement dans des deuxièmes phases du signal radio dans lesquelles le signal de télécommunications ne peut pas être émis lorsque la puissance instantanée des impulsions est inférieure audit seuil de puissance.

Selon un mode de réalisation, le signal de télécommunications est émis en mode duplex par séparation temporelle, et comprend une alternance de phase de réception et de phase d'émission du signal de télécommunications séparées par des temps de garde, et les premières phases comprennent les phases de réception et les temps de garde qui les précèdent.

Selon un mode de réalisation, à l'étape a), il est déterminé des caractéristiques du signal radar parmi la période des impulsions, et/ou la durée des impulsions, et/ou la période de rotation mécanique du radar, et/ou l'histogramme des puissances instantanées des impulsions en fonction de l'angle de tir du radar sur sa période de rotation mécanique.

Selon un mode de réalisation, à l'étape c), le signal radio est mis à zéro aux emplacements des impulsions radar.

Un mode de réalisation prévoit également un dispositif de traitement d'un signal radio comprenant un signal de télécommunications perturbé par des impulsions d'un signal radar, le dispositif comprenant :
- un module de détermination de la puissance instantanée des impulsions ou d'estimation de la puissance instantanée des impulsions ; et
- un module de détermination du rapport entre la puissance moyenne du signal de télécommunications et la puissance instantanée des impulsions radar et de modification du signal radio aux emplacements des impulsions radar lorsque ledit rapport est inférieur à un seuil.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une courbe d'évolution en fonction du temps de la puissance instantanée d'un signal radar reçu par un récepteur radio ;
la figure 2 est une modélisation de l'évolution en fonction du temps de l'enveloppe de la puissance instantanée d'un signal radar reçu par un récepteur radio ;
la figure 3 représente, de façon partielle et schématique, un mode de réalisation d'un système de télécommunications ;
la figure 4 représente, de façon partielle et schématique, un mode de réalisation d'un module d'une station du système de télécommunications de la figure 3 ;
la figure 5 est un schéma par blocs d'un mode de réalisation d'un procédé de traitement d'un signal radio reçu par une station du système de télécommunications de la figure 3 ;
la figure 6 illustre le principe de détermination de seuils de comparaison mis en oeuvre par le procédé illustré en figure 5 ;
la figure 7 représente une courbe d'évolution dans le temps de la puissance instantanée d'un signal radio échangé entre deux stations en mode duplex par séparation temporelle en l'absence de perturbation par un signal radar ;
la figure 8 est une figure analogue à la figure 7 en présence de perturbations par un signal radar ;
la figure 9 représente une courbe d'évolution de l'angle de visée d'un radar en fonction du temps ;
la figure 10 représente un historique des angles de visée d'un radar ;
la figure 11 représente, en partie haute, une courbe d'évolution dans le temps de l'amplitude d'un signal radio (multi-porteuse) pollué par un bruit impulsionnel et, en partie basse, des signaux démodulés dans la constellation I/Q utilisée pour la transmission du signal radio pour une première configuration d'émission ; et
la figure 12 est une figure analogue à la figure 11 pour une deuxième configuration d'émission avec un bruit impulsionnel plus long et un rapport puissance de signal sur puissance du bruit identique.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les étapes et éléments utiles à la compréhension des modes de réalisation décrits ont été représentés et sont détaillés. Sauf précision contraire, les expressions "environ", "approximativement", "sensiblement", et "de l'ordre de" signifient à 10 % près, de préférence à 5 % près.

Dans la suite de la description, on appelle signal radio le signal numérique obtenu par échantillonnage et conversion analogique/numérique d'un signal analogique fourni par une antenne radio d'un récepteur radio captant des ondes radio ou un signal numérique avant conversion numérique/analogique pour la commande d'une antenne radio d'un émetteur radio. Le signal radio comprend notamment une partie, appelée signal de télécommunications ou signal télécom, correspondant aux données "utiles" échangées entre l'émetteur et le récepteur à destination d'un utilisateur et une partie correspondant à des signaux de commande servant au bon fonctionnement de l'émetteur et/ou du récepteur mais ne contenant pas d'informations "utiles" pour l'utilisateur.

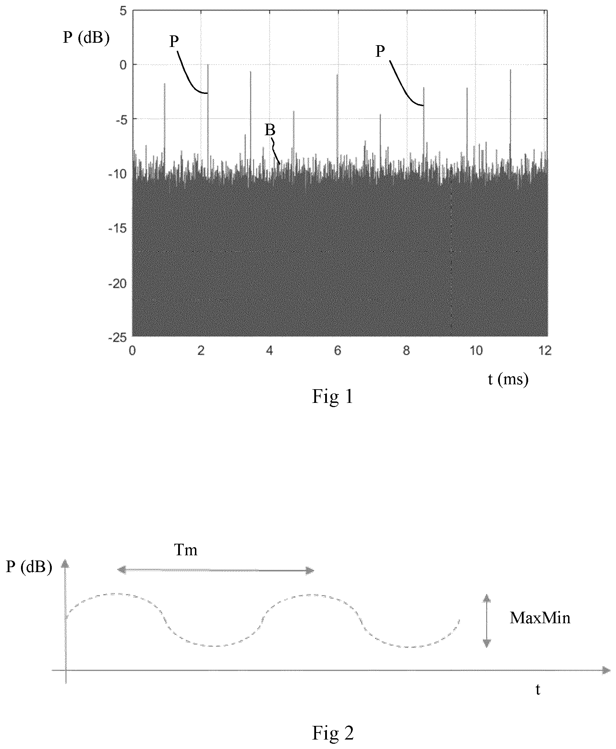

La figure 1 est un exemple de courbe d'évolution en fonction du temps de la puissance instantanée P (en dB) normalisée par rapport à la puissance maximale d'un signal reçu par un récepteur radio après filtrage en l'absence de signal télécom dans le cas où un signal radar parasite est présent. Dans cet exemple, le filtrage est réalisé pour ne conserver que les fréquences du canal de transmission, par exemple autour de 3,59 GHz pour une application en télécommunications. Le signal radar parasite correspond à un signal émis par un radar impulsionnel à une fréquence centrée sur 3,05 GHz tournant sur lui-même avec une période de quelques secondes. Dans l'exemple de la figure 1, le signal de base B correspond au bruit thermique du récepteur et les pics P correspondent aux impulsions du signal radar. Bien que le radar et la station radio ont des fréquences d'émission différentes, le récepteur radio voit dans sa bande filtrée une contribution du signal radar. Comme le radar a une puissance très supérieure à la puissance du signal télécom attendue, son bruit hors bande est visible par le récepteur radio quand celui-ci a son gain de réception maximal.

La figure 2 représente une modélisation de l'évolution de l'enveloppe de la puissance instantanée P (en dB) d'un signal radar reçu par un récepteur radio en fonction du temps. La propriété périodique de la courbe obtenue est induite par la rotation mécanique du radar alors que l'antenne du récepteur radio est considérée fixe sur la durée de rotation de l'antenne radar. Le niveau des impulsions radar reçues dépend de la distance entre le radar et le récepteur de télécommunications, de l'angle de tir du radar, du diagramme d'antenne du récepteur de télécommunications et de son orientation, et de la puissance d'émission du radar. Le niveau des impulsions radar reçues varie au cours d'une rotation du radar. On appelle Tm la période de révolution du radar. A titre d'exemple, la période Tm peut varier de 1 à 10 secondes. A titre d'exemple, les variations MaxMin de la puissance radar reçue par le récepteur radio au cours de la rotation du radar peuvent être de l'ordre de 20 dB en fonction de l'angle de tir du radar.

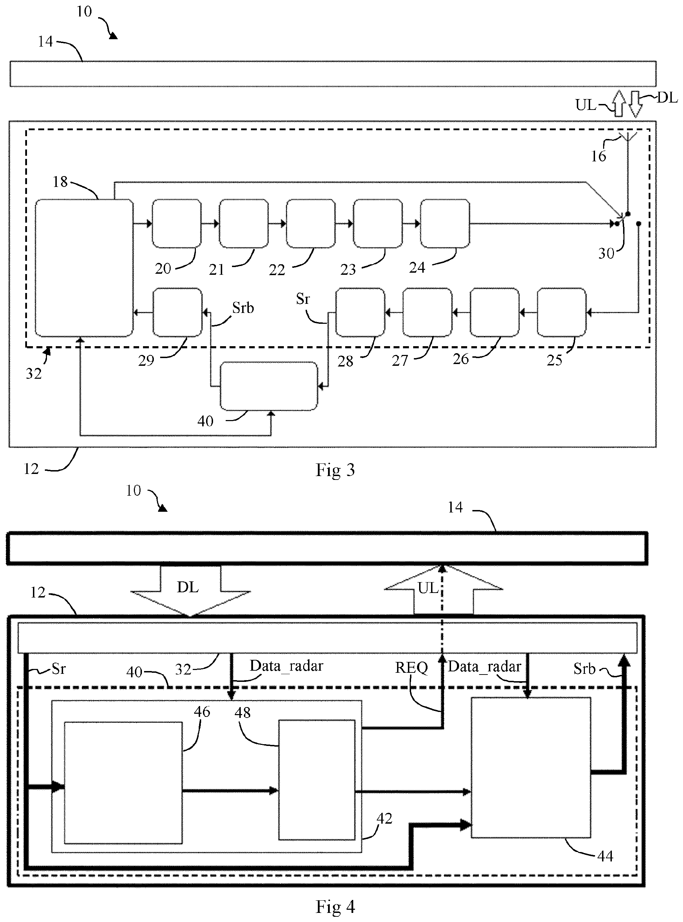

La figure 3 représente de façon partielle et schématique un mode de réalisation d'un système 10 de télécommunications comprenant une première station 12 adaptée à recevoir des signaux radio DL transmis par une deuxième station 14 et adaptée à transmettre des signaux radio UL à la deuxième station 14. A titre d'exemple, la première station 12 correspond à une station maritime de télécommunications équipant un navire et la deuxième station 14 correspond à une station terrestre de télécommunications. Selon un mode de réalisation, la transmission de données entre les stations 12 et 14 met en oeuvre une modulation multiporteuses, par exemple les modulations utilisées dans les réseaux de téléphonie mobile, notamment les réseaux 4G LTE (sigle anglais pour Long Term Evolution), les réseaux 5G, les modulations utilisées dans les réseaux locaux sans fil WLAN (sigle anglais pour Wireless Local Area Network), les modulations utilisées dans les réseaux métropolitain sans fil WMAN (sigle anglais pour Wireless Metropolitan Area Network), les réseaux Wi-Fi, et les réseaux WiMAX (sigle pour Worldwide Interoperability for Microwave Access).

La station maritime 12 comprend une antenne 16 d'émission/réception des signaux radio UL et DL et une unité de traitement 18. La station maritime 12 comprend, en série dans une partie émettrice d'une chaîne de transmission, un module de codage 20 de signaux numériques fournis par l'unité de traitement 18, un convertisseur numérique/analogique (CNA) 21, un étage de transposition de fréquence 22 de la bande de base vers la bande de fréquence du canal de transmission, un amplificateur haute puissance 23, et un filtre passe-bande 24. La station maritime 12 comprend en outre, en série dans une partie réceptrice de la chaîne de transmission, un filtre passe-bande 25, un amplificateur faible bruit 26, un étage de transposition de fréquence 27 de la bande de fréquence du canal de transmission vers la base de base, un convertisseur analogique/numérique (CAN) 28, et un module de décodage 29. Le module de décodage 29 peut également intégrer les fonctions de filtrage, de synchronisation, d'égalisation de canal, de suivi de canal et de démodulation numérique. La station maritime 12 comprend en outre un commutateur 30, commandé par l'unité de traitement 18, et adapté à relier l'antenne 16 à la partie émettrice de la chaîne de transmission ou à la partie réceptrice de la chaîne de transmission. Pour l'émission d'un signal radio par la station maritime 12, les signaux numériques fournis par l'unité de traitement 18 sont codés par le module de codage 20 pour les rendre moins vulnérables aux imperfections du canal de transmission et au bruit. Ensuite les signaux numériques sont convertis en signaux analogiques par le convertisseur numérique analogique 21. Le modulateur 22 transpose le signal analogique à la fréquence désirée. Les signaux modulés sont alors amplifiés par l'amplificateur 23, puis filtrés par le filtre passe-bande 24, et enfin transmis à l'antenne 16. Pour la réception d'un signal radio par la station maritime 12, le signal capté par l'antenne 16, est filtré par le filtre de réception 25 et amplifié par l'amplificateur faible bruit 26. Le démodulateur 27 fournit, à partir du signal filtré, un signal analogique. Le signal Sr, obtenu après échantillonnage et conversion analogique/numérique par le convertisseur 28 est envoyé à un module de caractérisation et de neutralisation du signal radar 40 qui fournit un signal Srb. Le module de décodage 29 reçoit le signal Srb et fournit un signal numérique décodé à l'unité de traitement 18. L'ensemble comprenant l'antenne 16, l'unité de traitement 18, le commutateur 30, et les modules 20, 21, 22, 23, 24, 25, 26, 27, 28, et 29 est appelé module de télécommunications 32 de la station maritime 12 par la suite. L'unité de traitement 18 et les modules 20, 21, 22, 23, 24, 25, 26, 27, 28, et 29 peuvent comprendre au moins un processeur adapté à exécuter les instructions d'un programme d'ordinateur ou au moins un circuit électronique dédié.

La station maritime 12 comprend en outre le module 40 de caractérisation et de neutralisation du signal radar recevant le signal Sr et fournissant un signal Srb au module de décodage 29. Lorsque le module 40 est désactivé, le signal Srb correspond au signal Sr. Lorsque le module 40 est activé, le signal Srb correspond au signal Sr auquel a été éventuellement appliqué un traitement pour retirer les impulsions parasites dues à un signal radar. Un exemple de traitement, appelé blanking, consiste à insérer des zéros à la place des impulsions parasites détectées au préalable dans le signal numérique démodulé. Selon une variante, appelée clipping, il est inséré dans le signal démodulé une valeur à la place des impulsions parasites, cette valeur pouvant dépendre notamment de l'amplitude du signal radio avant l'impulsion parasite. Cette approche vise à saturer la puissance des échantillons corrompus tout en conservant la phase initiale du signal complexe. Le module 40 est en outre adapté à échanger des données avec l'unité de traitement 18.

La figure 4 représente un mode de réalisation plus détaillé du module 40 du système 10 de télécommunications de la figure 3. Le module 40 de caractérisation et de neutralisation du signal radar comprend un module 42 de caractérisation du signal radar et un module 44 de neutralisation du signal radar. Le module 42 de caractérisation du signal radar comprend un module 46 d'observation du signal radar et un module 48 de prédiction du signal radar. Le module 42 de caractérisation du signal radar reçoit le signal Sr. Le module 44 de neutralisation du signal radar fournit le signal Srb.

Selon un mode de réalisation, le module de communication 32 transmet au module 40 des informations Data _radar sur la structure des trames reçues par la station maritime 12. Ces informations dépendent notamment du procédé de communication mis en oeuvre entre la station maritime 12 et la station terrestre 14.

Selon un mode de réalisation, le module 42 de caractérisation du signal radar est adapté à transmettre au module 32 de télécommunications des requêtes REQ pour modifier des paramètres du procédé de communication entre les stations 12 et 14.

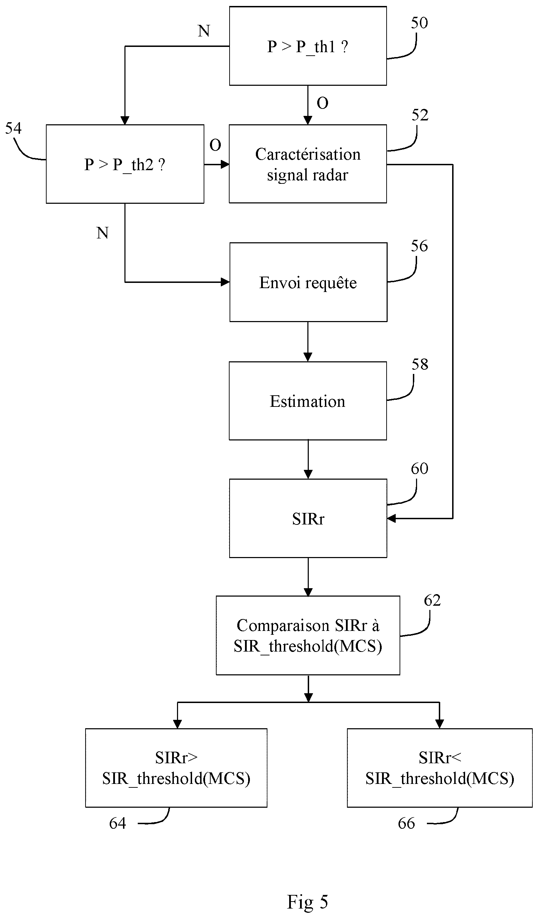

La figure 5 est un schéma par bloc d'un mode de réalisation d'un procédé de traitement du signal Sr effectué par le module 40 de caractérisation et de neutralisation du signal radar.

La réalisation du procédé de traitement du signal Sr par le module 40 décrit par la suite peut être commandée par le module 32 de télécommunications.

Aux premières étapes du procédé, le module 46 d'observation du signal radar analyse le signal Sr pour déterminer si un signal radar parasite est présent.

Plus précisément, à l'étape 50, le module 46 recherche dans le signal Sr pendant une première phase d'observation des impulsions radar ayant une puissance instantanée plus forte que la puissance moyenne du signal télécom reçu. Selon un mode de réalisation, le module 46 compare la puissance instantanée du signal Sr à un premier seuil de puissance instantanée P_th1. Si une détection du signal radar est obtenue à l'étape 50, c'est-à-dire si la puissance instantanée du signal Sr est supérieure au premier seuil P_th1 (branche O), le procédé se poursuit à l'étape 52. Si aucune détection n'a été faite, c'est-à-dire si la puissance instantanée du signal Sr est inférieure au premier seuil P_th1 (branche N), ceci signifie que le signal radar, s'il est présent, a une puissance instantanée plus forte que la puissance du bruit du module de télécommunications 32 mais plus faible que la puissance moyenne du signal Sr reçu. Le procédé se poursuit alors à l'étape 54.

A l'étape 52, le module 46 détermine des caractéristiques du signal radar. Les caractéristiques du signal radar qui sont déterminées peuvent comprendre la période des impulsions, et la durée des impulsions, et/ou la période de rotation mécanique du radar, et/ou l'histogramme des puissances des impulsions en fonction de l'angle de tir du radar sur sa période de rotation.

A l'étape 54, le module 46 recherche dans le signal Sr pendant une deuxième phase d'observation des impulsions radar parasite ayant une puissance instantanée plus forte que la puissance du bruit du module de télécommunications 32 mais plus faible que la puissance moyenne du signal Sr. La deuxième phase d'observation peut être identique à la première phase d'observation (c'est-à-dire commençant et s'achevant aux mêmes instants) ou peut être différente de la première phase d'observation (c'est-à-dire commençant et s'achevant à des instants différents). Comme cela est décrit plus en détail par la suite, la deuxième phase d'observation est de préférence limitée aux intervalles où il n'y a pas de signal télécom. Selon un mode de réalisation, le module 46 compare la puissance instantanée du signal Sr à un deuxième seuil de puissance instantanée P_th2. Si une détection du signal radar est obtenue à l'étape 54, c'est-à-dire si la puissance instantanée du signal Sr est supérieure au deuxième seuil P_th2 (branche O), le procédé se poursuit à l'étape 52 à laquelle le module 46 détermine les caractéristiques du signal radar comme cela a été décrit précédemment. Si aucune détection de signal radar n'a été faite à l'étape 54, c'est-à-dire si les pulses radar n'ont pas été détectés pendant la deuxième phase d'observation, qui de préférence comprend les temps de garde ou les temps où il n'y avait pas de symbole émis par la station terrestre 14 (branche N), le procédé se poursuit à l'étape 56.

Le module 46 est susceptible de se trouver dans l'un de deux états. Le premier état correspond à la détection d'un signal radar et le deuxième état correspond à la non détection d'un signal radar. Selon un mode de réalisation, le module 46 passe dans le deuxième état si aucune impulsion radar n'est détectée à l'étape 52 ou à l'étape 54 pendant une durée donnée, par exemple la durée correspondant à une rotation mécanique du radar de 360 °, c'est-à-dire une révolution complète. Selon un mode de réalisation, le module 46 passe dans le premier état si au moins un nombre minimal d'impulsions est détecté pendant une durée donnée, par exemple la durée correspondant à une rotation mécanique du radar de 360 °. A titre d'exemple, pour un radar émettant environ 1500 impulsions sur une révolution complète de deux secondes, le nombre minimal peut être de l'ordre de 15.

A l'étape 56, le module 42 envoie une requête REQ au module de télécommunications 32 pour modifier des paramètres du mode de communication entre les stations 12 et 14 et/ou des paramètres de fonctionnement du module 32 de télécommunications pour augmenter les chances de détection du signal radar à la prochaine tentative de détermination du signal radar. Selon un mode de réalisation, le module 42 demande d'augmenter la durée de la première et/ou deuxième phase d'observation et/ou d'augmenter la sensibilité du module de télécommunications 32. Selon un autre mode de réalisation, le module 42 peut demander des temps de silence (non-transmission de signal radio) pour faciliter la détection du signal radar, notamment s'il a une puissance plus faible que celle du signal radio. En particulier, le module 42 peut demander à la station terrestre de ne pas émettre durant l'intégralité de ses phases d'émission afin de créer des temps d'observation où seul le radar est visible. Le procédé se poursuit à l'étape 58.

A l'étape 58, le module 48 de prédiction du signal radar fournit une estimation de la localisation des impulsions radar dans le temps quand le module 46 n'est pas parvenu à détecter les impulsions radar et/ou une estimation de la puissance des impulsions radar quand le module 46 n'est pas parvenu à détecter les impulsions radar. La puissance de chaque impulsion radar peut être estimée à partir d'une modélisation du signal radar et à partir d'un signal de synchronisation de rotation du radar de période de révolution Tm. La synchronisation de rotation du radar correspond aux instants où la puissance radar est la plus importante sur sa période de révolution Tm. La modélisation peut être obtenue à partir de l'historique sur un nombre donné des dernières révolutions du radar. A titre d'exemple, pour un radar émettant environ 1500 impulsions sur une révolution complète de deux secondes, les 30 dernières révolutions du radar peuvent être prises en compte, ce qui correspond à environ 1 minute glissante et 120000 impulsions radar consécutives.

A l'étape 60, le module 44 de neutralisation du signal radar détermine une donnée représentative des perturbations dues au radar, appelée par la suite rapport SIRr. Le rapport SIRr est le rapport entre la puissance moyenne du signal télécom sur la puissance instantanée du signal radar quand celui-ci est présent. La puissance du signal télécom est fournie par le module 32 de télécommunications. Dans le cas où le signal télécom est émis selon une modulation de type multiporteuse, la puissance moyenne peut être déterminée sur la durée d'un symbole. La puissance du signal radar est soit la puissance déterminée par le module 46 d'observation du signal radar (si l'impulsion radar est détectée), soit la puissance estimée par le module 48 de prédiction du signal radar (si l'impulsion radar n'est pas détectée). Le procédé se poursuit à l'étape 62.

A l'étape 62, le module 44 compare le rapport SIRr déterminé à un seuil SIR_threshold (MCS). Selon un mode de réalisation, le seuil SIR_threshold (MCS) dépend du schéma de codage et de modulation (MCS, sigle anglais pour Modulation and Coding Scheme) du symbole courant. Dans le cas où le rapport SIRr est supérieur strictement au seuil SIR_threshold(MCS), le procédé se poursuit à l'étape 64. Dans le cas où le rapport SIRr est inférieur strictement au premier seuil SIR_threshold(MCS), le procédé se poursuit à l'étape 66.

A l'étape 64, dans le cas où le rapport SIRr est supérieur au seuil SIR_threshold(MCS), il est considéré que le signal radar n'est pas gênant et aucun traitement de neutralisation des impulsions radar n'est réalisé. Le signal Srb est alors identique au signal Sr.

A l'étape 66, dans le cas où le rapport SIRr est inférieur strictement au seuil SIR_threshold(MCS), un procédé de masquage des impulsions radar est alors mis en oeuvre pour fournir un signal Srb transmis au module 32 de télécommunications. Selon un mode de réalisation, l'étape de neutralisation des impulsions radar peut comprendre la mise en oeuvre d'un procédé de masquage de type blanking comprenant le remplacement des impulsions par des zéros dans le signal échantillonné Sr. De façon générale, il est connu qu'un procédé de masquage de type blanking n'est pas le plus efficace et que, dans cette configuration, la technique de clipping serait plus adaptée. Toutefois, un procédé de masquage de type blanking est de façon avantageuse simple à mettre en oeuvre et, en raison de la durée brève des impulsions radar, il peut être mis en oeuvre sans dégrader le traitement du signal Srb par le module 32 de télécommunications par rapport à un autre type de procédé de masquage.

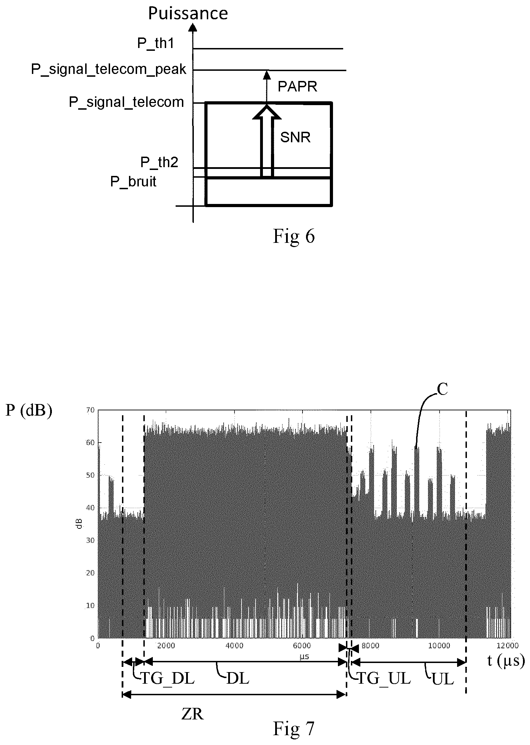

La figure 6 illustre un mode de réalisation de détermination des seuils P_th1 et P_th2. On a représenté en figure 6, exprimées en décibels, la puissance P_bruit de bruit du module 32 de télécommunications, la puissance moyenne P_signal_telecom du signal télécom reçu par le module 32 de télécommunications en l'absence de parasites, et la puissance maximale P_signal_telecom_peak du signal télécom reçu par le module 32 de télécommunications en l'absence de parasites. La puissance P_bruit est directement liée au gain d'amplification du module 32 de télécommunications.

Le rapport signal/bruit S/B (Signal to Noise Ratio S/N ou SNR en anglais ), appelé encore rapport signal à bruit SNR définit le rapport entre la puissance moyenne P_signal_telecom du signal télécom reçu par le module 32 de télécommunications et la puissance de bruit P_bruit. Lorsque les puissances sont exprimées en décibels, le SNR est égal à la différence entre la puissance P_signal_telecom et la puissance P_bruit.

Le PAPR (sigle anglais pour Peak-to-Average Power Ratio) représente le rapport de surdimensionnement nécessaire entre la puissance maximale de l'amplificateur du module 32 de télécommunications (la puissance pour laquelle il est conçu), et la puissance moyenne réellement transmise. Le PAPR est différent de zéro lorsque l'enveloppe du signal radio n'est pas constante. Lorsque les puissances sont exprimées en décibels, le PAPR est égal à la différence entre la puissance crête P_signal_telecom_peak et la puissance moyenne P_signal_telecom. En particulier, lorsqu'une modulation du type multi-porteuse est mise en oeuvre pour la fourniture du signal radio, le PAPR peut être de l'ordre de 7 dB.

La figure 7 représente une courbe d'évolution de la puissance P, exprimée en décibels (dB), en fonction du temps du signal Sr émis et reçu par l'antenne 16 de la station 12 en l'absence de signal radar parasite. Selon un mode de réalisation, la communication entre la station maritime 12 et la station terrestre 14 s'effectue en mode duplex par séparation temporelle (TDD, sigle anglais pour time-division duplex), c'est-à-dire que la station maritime 12 et la station terrestre 14 émettent successivement dans le temps dans la même bande de fréquence. Selon un autre mode de réalisation, la communication entre la station maritime 12 et la station terrestre 14 s'effectue mode duplex par séparation fréquentielle (FDD, sigle anglais pour Frequency Division Duplex).

En mode duplex par séparation temporelle, le signal Sr à l'antenne 16 de la station maritime 12 comprend une succession de trames, chaque trame comprenant la succession de quatre phases TG_DL, DL, TG_UL, et UL. La phase DL correspond à la phase de communication descendante dans laquelle la station terrestre 14 peut transmettre des données à la station maritime 12. Sur cette figure, la phase DL est complètement remplie (100 % des ressources temps/fréquence). La phase UL correspond à la phase de communication montante dans laquelle la station maritime 12 peut transmettre des données à la station terrestre 14. Dans l'exemple illustré en figure 7, il n'y a pas de transmission de données "utiles" de la station maritime 12 vers la station terrestre 14 pendant la phase UL représentée. Les seuls signaux présents pendant la phase UL en figure 7 correspondent à des signaux C de commande (signaux pilotes et messages de contrôle) transmis de façon systématique par la station maritime 12 vers la station terrestre 14. Chaque phase TG_DL et TG_UL, appelée temps de garde, correspond à une phase d'absence de transmission de signaux entre les deux stations 12 et 14. En figure 7, la durée de la phase TG_DL est nettement supérieure à la durée de la phase TG_UL. On appelle phase de réception ZR la phase comprenant le temps de garde TG_DL et la phase DL suivante. On appelle phase de silence de réception n'importe quelle phase pendant laquelle la station maritime 12 n'émet aucune donnée. La phase de silence comprend chaque temps de garde TG_DL et TG_UL, chaque phase d'écoute de la station maritime 12 pendant chaque phase DL alors qu'aucune donnée n'est transmise par la station terrestre 14, et chaque phase de silence imposé pendant une phase UL.

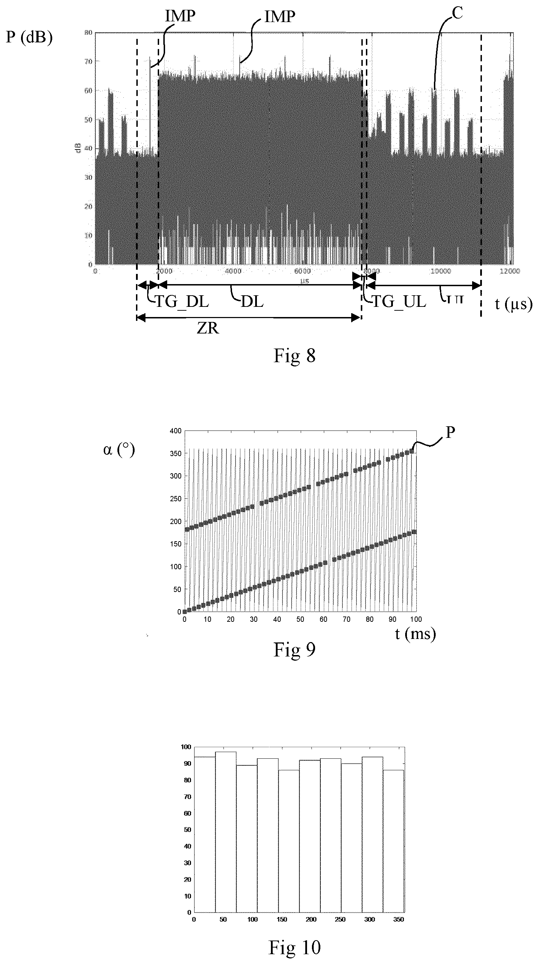

La figure 8 est une courbe analogue à la figure 7 en présence d'un signal radar parasite. Des impulsions radar IMP sont notamment visibles pendant la phase DL sur la figure 8, ce qui signifie que, dans cet exemple, le signal radar est très fort et qu'une détection du signal radar à l'étape 50 décrite précédemment est possible. Si le signal radar est plus fort que le bruit de réception mais plus faible que le seuil P_th1, un mode de réalisation prévoit, à l'étape 54 décrite précédemment, d'observer le signal radar durant les phases de silence où il n'y a pas de signal reçu, notamment durant le temps de garde TG_DL ou durant la phase DL s'il n'y a pas de trafic. En figure 8, 100 % des ressources sont utilisées pendant la phase DL. Si par exemple uniquement 10 % des ressources sont utilisées, alors la phase DL présente des zones de silence qui sont connues par la station maritime 12 et il est possible de les utiliser pour la détection à l'étape 54. En figure 8, si les impulsions radar étaient plus faibles que le signal mais plus fortes que le bruit, il serait possible de détecter une seule impulsion radar IMP durant la phase TG_DL, dans la mesure où durée TG_DL est inférieure à la période entre deux impulsions radar IMP dans cet exemple. Ceci signifie que la détection à l'étape 54 pourrait ne pas aboutir. Si le récepteur est perturbé par le radar et qu'il n'est pas possible de le détecter pour le caractériser alors un mode de réalisation prévoit d'envoyer une requête de silence à la station terrestre, à l'étape 56 décrite précédemment.

Le seuil P_th1 peut être déterminé en tenant compte de la dynamique du convertisseur analogique-numérique 28 du module 32 de télécommunications utilisé pour obtenir le signal échantillonné Sr et le contrôle du gain de ce convertisseur. A titre d'exemple, le seuil P_th1 est égal à la somme de la puissance moyenne du signal Sr pendant une phase ZR et du PAPR majoré de 3 dB. A titre d'exemple, le seuil P_th2 est égal à la puissance de bruit majorée de 3 dB.

Selon un mode de réalisation, la première phase d'observation à l'étape 50 décrite précédemment en relation avec la figure 5 correspond à une phase ZR. De préférence, la première phase d'observation à l'étape 50 décrite précédemment en relation avec la figure 5 correspond à chaque phase ZR. Selon un mode de réalisation, la deuxième phase d'observation à l'étape 50 décrite précédemment en relation avec la figure 5 correspond au temps de garde TG_DL d'une phase de silence. De préférence, la deuxième phase d'observation à l'étape 54 décrite précédemment en relation avec la figure 5 correspond à chaque phase de silence.

Selon un mode de réalisation, à l'étape 58 décrite précédemment, le module 42 demande au module de télécommunications 32 une augmentation des durées des phases de silence et/ou une augmentation du gain d'amplification utilisé par le module 32 de télécommunications pour fournir le signal Sr sur ces phases de silence. Le gain d'amplification doit permettre la détection du signal radar quand le signal télécom est présent, l'amplitude maximale du signal télécom ne doit pas dépasser la moitié de la pleine échelle, par exemple +/- 1024 pour un convertisseur analogique/numérique à 12 bits.

En considérant à nouveau la figure 4, selon un mode de réalisation, le module de télécommunications 32 transmet au module 40 de caractérisation et de neutralisation du signal radar des informations sur la structure des trames reçues par la station maritime 12.

Selon un mode de réalisation, lorsqu'un mode duplex par séparation temporelle est mis en oeuvre, le module de télécommunications 32 transmet au module 42 de caractérisation du signal radar les informations suivantes :
- début et fin de chaque phase de réception ZR ;
- début et fin de chaque phase de silence ; et
- le gain d'amplification utilisé par le module 32 de télécommunications pour la trame en cours.

Selon un mode de réalisation, en mode duplex par séparation temporelle, le module de télécommunications 32 transmet au module 44 de neutralisation du signal radar les informations suivantes :
- la puissance du signal radio par symbole ; et
- le schéma de codage et de modulation (MCS, sigle anglais pour Modulation and Coding Scheme) du symbole courant.

Selon un mode de réalisation, le module 44 de neutralisation du signal radar mémorise en outre une table contenant les seuils SIR_threshold(MCS) à utiliser en fonction de chaque schéma de codage et de modulation de la forme d'onde à partir desquels le traitement de neutralisation doit être activé. Les seuils SIR_threshold(MCS) peuvent être déterminés par des essais.

Selon un mode de réalisation, le module 46 d'observation du signal radar reçoit en outre des données représentatives de caractéristiques du radar. Ces caractéristiques peuvent comprendre la vitesse de rotation du radar, les périodes minimales et maximales des impulsions du radar, et/ou les durées minimales et maximales des impulsions du radar. Ceci permet de borner, voire de corriger, les estimations de propriétés du signal radar réalisées par le module 48 de prédiction du signal radar.

Selon un mode de réalisation, à l'étape 56 décrite précédemment en relation avec la figure 5, le module 40 de caractérisation et de neutralisation du signal radar transmet au module 32 de télécommunications une requête REQ pour augmenter la durée des phases de silence. Par exemple, dans ce but, pendant une phase UL, le module 32 de télécommunications peut ne pas émettre de signaux télécom pendant une trame, ce qui ne correspond pas à un mode de communication habituel entre les stations 12 et 14. La station maritime 12 peut en outre demander à la station terrestre 14 d'allouer des phases de silence pour estimer la localisation des impulsions radar dans le temps et leur puissance.

Des simulations ont été réalisées. Pour ces simulations, la période des impulsions radar était égale à 1,3 ms. La durée d'activité, qui correspond au rapport entre la durée d'émission et la période d'apparition des pulses, était de 3 %. La période de révolution Tm du radar était égale à 2 s. Le mode de communication entre les stations 12 et 14 était le mode duplex par séparation temporelle. La période de trames était de 10 ms et la durée d'un symbole était de 500 µs.

Des premières simulations ont été réalisées en imposant à la station terrestre 14 une trame de silence toutes les 101 trames. Ceci correspond à une perte de débit de 1 %.

La figure 9 représente une courbe d'évolution de l'angle de visée α du radar en fonction du temps et chaque point P représente un instant de mesure de la puissance instantanée du signal radar par le module 46 de la station 12 pour les premières simulations.

La figure 10 représente un historique du nombre de mesures réalisées par le module 46 de la station 12 lors des premières simulations en fonction de plages d'angles de visée du radar.

Les figures 9 et 10 mettent en évidence la possibilité de scanner tous les angles de tir du radar et donc d'obtenir une modélisation de l'évolution du signal radar comme représenté en figure 2.

Des deuxièmes simulations ont été réalisées dans lesquelles un traitement du signal radio par blanking a été mis en oeuvre. Pour les deuxièmes simulations, le SIRr était de l'ordre de 20 dB et le signal radar décrit précédemment était présent.

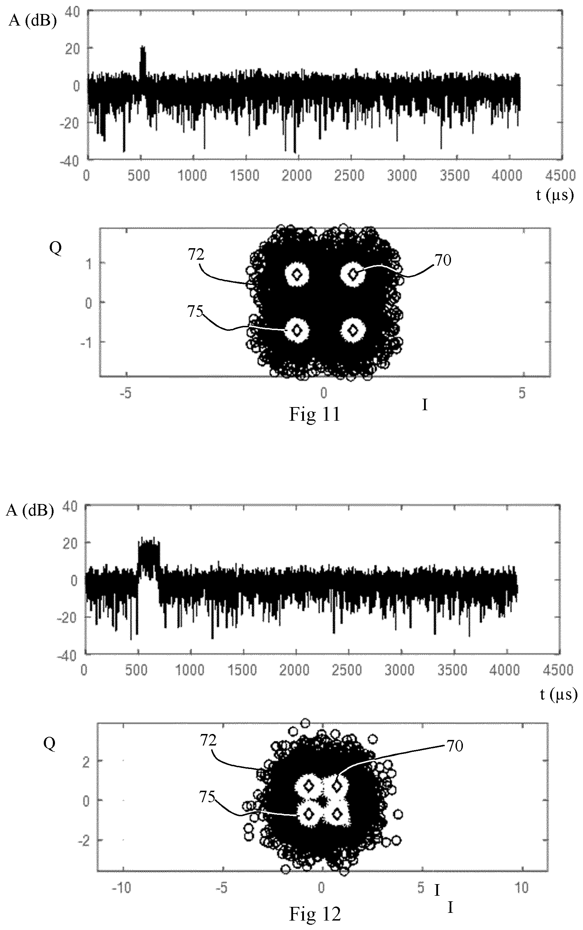

Les figures 11 et 12 représentent chacune, en partie haute, une courbe d'évolution de l'amplitude A du signal radio Sr en fonction du temps et en partie basse une constellation I/Q du signal démodulé, les losanges 70 représentant les points de la constellation, les cercles noirs 72 représentant les échantillons démodulés sans traitement de blanking et les zones blanches 75 centrées sur les points 70 de la constellation indiquant les emplacements des échantillons démodulés avec traitement de blanking. La figure 11 a été obtenue lorsque le signal impulsionnel de bruit est actif 1 % du temps et la figure 12 a été obtenue lorsque ce signal est actif 5 % du temps.

Selon un autre mode de réalisation, l'antenne 16 de la station 12 est une antenne mobile. Le module 40 de caractérisation et de neutralisation du signal radar peut caractériser complètement le couplage entre la station 12 et le radar et obtenir une fonction de la puissance du signal radar reçu en fonction de l'angle de tir radar et l'angle de pointage de l'antenne 16 mobile.

Le module 40 peut ainsi calibrer la puissance radar reçue pour chaque angle de pointage de l'antenne 16 mobile en fonction de la direction du tir radar qui dépend du temps quand le radar est en fonctionnement et que la station 12 est à l'arrêt. La courbe représentant l'angle de l'antenne du radar en fonction de l'angle de l'antenne 16 de la station 12 peut être filtrée et peut servir de modèle pour la prédiction par le module 48 de prédiction du signal radar. Dans ce cas, le module 32 de télécommunications est adapté à transmettre au module 48 de prédiction du signal radar l'information de pointage de l'antenne 16.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que dans les modes de réalisation décrits précédemment le signal radio reçu par la station 12 est perturbé par le signal radar provenant d'un seul radar, il est clair que le procédé de traitement du signal radio décrit précédemment peut être mis en oeuvre lorsque le signal radio reçu par la station 12 est perturbé par des signaux radar provenant de plusieurs radars.

Enfin, la mise en oeuvre pratique des modes de réalisation et variantes décrits est à la portée de la personne du métier à partir des indications fonctionnelles données ci-dessus.

## Revendications

1. Procédé de traitement par un émetteur/récepteur radio (12) d'un signal radio (Sr) comprenant un signal de télécommunications perturbé par des impulsions d'un signal radar, le procédé comprenant les étapes suivantes :
a) estimer la puissance instantanée des impulsions ;
b) estimer le rapport (SIRr) entre la puissance moyenne du signal de télécommunications et la puissance instantanée des impulsions radar ; et
c) modifier le signal radio aux emplacements des impulsions radar lorsque ledit rapport est inférieur à un seuil (SIR_threshold(MCS)) .

2. Procédé selon la revendication 1, dans lequel le signal radio (Sr) n'est pas modifié lorsque ledit rapport (SIRr) est supérieur au seuil (SIR_threshold(MCS)) .

3. Procédé selon la revendication 1, dans lequel le seuil (SIR_threshold(MCS)) est inférieur ou égal au rapport signal à bruit du signal radio (Sr).

4. Procédé selon l'une quelconque des revendications 1 à 3, comprenant la transmission d'une requête (REQ) d'absence d'émission du signal de télécommunication lorsque les impulsions n'ont pas été détectées.

5. Procédé selon l'une quelconque des revendications 1 à 4, comprenant la transmission d'une requête (REQ) d'augmentation du gain d'amplification utilisé pour fournir le signal radio (Sr) lorsque les impulsions n'ont pas été détectées.

6. Procédé selon l'une quelconque des revendications 1 à 5, dans lequel l'étape a) comprend une recherche des impulsions dans le signal radio (Sr) et une détermination de la puissance instantanée des impulsions lorsque les impulsions ont été détectées.

7. Procédé selon la revendication 6, dans lequel l'étape a) comprend une estimation de la puissance instantanée des impulsions lorsque les impulsions n'ont pas été détectées dans le signal radio (Sr).

8. Procédé selon la revendication 6 ou 7, dans lequel la recherche des impulsions est réalisée dans des premières phases (ZR) du signal radio (Sr) dans lesquelles le signal de télécommunications est susceptible d'être émis lorsque la puissance instantanée des impulsions est supérieure à un seuil de puissance et seulement dans des deuxièmes phases du signal radio dans lesquelles le signal de télécommunications ne peut pas être émis lorsque la puissance instantanée des impulsions est inférieure audit seuil de puissance.

9. Procédé selon la revendication 8, dans lequel le signal de télécommunications est émis en mode duplex par séparation temporelle, et comprend une alternance de phase de réception (DL) et de phase d'émission (UL) du signal de télécommunications séparées par des temps de garde (TG), et dans lequel les premières phases comprennent les phases de réception et les temps de garde qui les précèdent.

10. Procédé selon l'une quelconque des revendications 1 à 9, dans lequel, à l'étape a), il est déterminé des caractéristiques du signal radar parmi la période des impulsions, et/ou la durée des impulsions, et/ou la période de rotation mécanique du radar, et/ou l'histogramme des puissances instantanées des impulsions en fonction de l'angle de tir du radar sur sa période de rotation mécanique.

11. Procédé selon l'une quelconque des revendications 1 à 10, dans lequel, à l'étape c), le signal radio (Sr) est mis à zéro aux emplacements des impulsions radar.

12. Dispositif (40) de traitement d'un signal radio (Sr) comprenant un signal de télécommunications perturbé par des impulsions d'un signal radar, le dispositif comprenant :
- un module (42) de détermination de la puissance instantanée des impulsions ou d'estimation de la puissance instantanée des impulsions ; et
- un module (48) de détermination du rapport (SIRr) entre la puissance moyenne du signal de télécommunications et la puissance instantanée des impulsions radar et de modification du signal radio aux emplacements des impulsions radar lorsque ledit rapport est inférieur à un seuil (SIR_threshold(MCS)) .

## Patentansprüche

1. Verfahren zum Verarbeiten, durch einen Funksender/-empfänger (12), eines Funksignals (Sr), das ein durch Impulse eines Radarsignals gestörtes Telekommunikationssignal aufweist, wobei das Verfahren die folgenden Schritte aufweist:
a) Schätzen der Momentanleistung der Impulse;
b) Schätzen des Verhältnisses (SIRr) der Durchschnittsleistung des Telekommunikationssignals zur Momentanleistung der Radarimpulse; und
c) Modifizieren des Funksignals an den Stellen der Radarimpulse, wenn das Verhältnis kleiner als ein Schwellenwert (SIR_threshold(MCS)) ist.

2. Verfahren nach Anspruch 1, wobei das Funksignal (Sr) nicht modifiziert wird, wenn das Verhältnis (SIRr) größer als der Schwellenwert (SIR_threshold(MCS)) ist.

3. Verfahren nach Anspruch 1, wobei der Schwellenwert (SIR_threshold(MCS)) kleiner oder gleich dem Signal-Rausch-Verhältnis des Funksignals (Sr) ist.

4. Verfahren nach einem der Ansprüche 1 bis 3, aufweisend das Senden einer Anforderung (REQ) zum Nicht-Senden des Telekommunikationssignals, wenn die Impulse nicht erkannt wurden.

5. Verfahren nach einem der Ansprüche 1 bis 4, aufweisend das Senden einer Anforderung (REQ) zum Erhöhen der Verstärkung, die zur Bereitstellung des Funksignals (Sr) verwendet wird, wenn die Impulse nicht erkannt wurden.

6. Verfahren nach einem der Ansprüche 1 bis 5, wobei Schritt a) eine Suche nach den Impulsen im Funksignal (Sr) und eine Bestimmung der Momentanleistung der Impulse aufweist, wenn die Impulse erkannt wurden.

7. Verfahren nach Anspruch 6, wobei Schritt a) eine Schätzung der Momentanleistung der Impulse aufweist, wenn die Impulse im Funksignal (Sr) nicht erkannt wurden.

8. Verfahren nach Anspruch 6 oder 7, wobei die Suche nach den Impulsen in ersten Phasen (ZR) des Funksignals (Sr) durchgeführt wird, in denen das Telekommunikationssignal wahrscheinlich übertragen wird, wenn die Momentanleistung der Impulse größer als ein Leistungsschwellenwert ist, und nur in zweiten Phasen des Funksignals, in denen das Telekommunikationssignal nicht übertragen werden kann, wenn die Momentanleistung der Impulse kleiner als der Leistungsschwellenwert ist.

9. Verfahren nach Anspruch 8, wobei das Telekommunikationssignal im Zeitduplexmodus übertragen wird und einen Wechsel von Empfangsphasen (DL) und Sendephasen (UL) des Telekommunikationssignals aufweist, die durch Schutzzeiten (TG) voneinander getrennt sind, und wobei die ersten Phasen die Empfangsphasen und die ihnen vorausgehenden Schutzzeiten aufweisen.

10. Verfahren nach einem der Ansprüche 1 bis 9, wobei in Schritt a) die Eigenschaften des Radarsignals während der Impulsperiode und/oder der Impulsdauer und/oder der mechanischen Drehperiode des Radars und/oder das Histogramm der Momentanleistungen der Impulse gemäß dem Abstrahlwinkel des Radars über seine mechanische Drehperiode bestimmt werden.

11. Verfahren nach einem der Ansprüche 1 bis 10, wobei in Schritt c) das Funksignal (Sr) an den Stellen der Radarimpulse auf Null gesetzt wird.

12. Vorrichtung (40) zum Verarbeiten eines Funksignals (Sr), das das ein durch Impulse eines Radarsignals gestörtes Telekommunikationssignal aufweist, wobei die Vorrichtung Folgendes aufweist:
- ein Modul (42) zum Bestimmen der Momentanleistung der Impulse oder zum Schätzen der Momentanleistung der Impulse; und
- ein Modul (48) zum Bestimmen des Verhältnisses (SIRr) der Durchschnittsleistung des Telekommunikationssignals zur Momentanleistung der Radarimpulse und zum Modifizieren des Funksignals an den Stellen der Radarimpulse, wenn das Verhältnis kleiner als ein Schwellenwert (SIR_threshold(MCS)) ist.

## Claims

1. Method of processing by a radio transmitter/receiver (12) of a radio signal (Sr) comprising a telecommunications signal disturbed by pulses of a radar signal, the method comprising the steps of:
a) estimating the instantaneous power of the pulses;
b) estimating the ratio (SIRr) of the average power of the telecommunications signal to the instantaneous power of the radar pulses; and
c) modifying the radio signal at the locations of the radar pulses when said ratio is smaller than a threshold (SIR_threshold(MCS)) .

2. Method according to claim 1, wherein the radio signal (Sr) is not modified when said ratio (SIRr) is greater than the threshold (SIR_threshold(MCS)) .

3. Method according to claim 1, wherein the threshold (SIR_threshold(MCS)) is smaller than or equal to the signal-to-noise ratio of the radio signal (Sr).

4. Method according to any of claims 1 to 3, comprising the transmission of a request (REQ) for not transmitting the telecommunications signal when the pulses have not been detected.

5. Method according to any of claims 1 to 4, comprising the transmission of a request (REQ) for increasing the amplification gain used to supply the radio signal (Sr) when the pulses have not been detected.

6. Method according to any of claims 1 to 5, wherein step a) comprises a search for the pulses in the radio signal (Sr) and a determination of the instantaneous power of the pulses when the pulses have been detected.

7. Method according to claim 6, wherein step a) comprises estimating the instantaneous power of the pulses when the pulses have not been detected in the radio signal (Sr).

8. Method according to claim 6 or 7, wherein the search for the pulses is carried out in first phases (ZR) of the radio signal (Sr) during which the telecommunications signal is likely to be transmitted when the instantaneous power of the pulses is greater than a power threshold and only in second phases of the radio signal during which the telecommunications signal cannot be transmitted when the instantaneous power of the pulses is smaller than said power threshold.

9. Method according to claim 8, wherein the telecommunications signal is transmitted in time-division duplex mode, and comprises an alternation of phases of reception (DL) and of phases of transmission (UL) of the telecommunications signal separated by guard times (TG), and wherein the first phases comprise the reception phases and the guard times preceding them.

10. Method according to any claims 1 to 9, wherein, at step a), characteristics of the radar signal among the period of the pulses, and/or the duration of the pulses, and/or the period of mechanical rotation of the radar, and/or the histogram of the instantaneous powers of the pulses are determined according to the shooting angle of the radar over its mechanical rotation period.

11. Method according to any of claims 1 to 10, wherein, at step c), the radio signal (Sr) is set to zero at the locations of the radar pulses.

12. Device (40) of processing of a radio signal (Sr) comprising a telecommunications signal disturbed by pulses of a radar signal, the device comprising:
- a module (42) for determining the instantaneous power of the pulses or for estimating the instantaneous power of the pulses; and
- a module (48) for determining the ratio (SIRr) of the average power of the telecommunications signal to the instantaneous power of the radar pulses and for modifying the radio signal at the locations of the radar pulses when said ratio is smaller than a threshold (SIR_threshold(MCS)) .
